Europäisches Patentamt

European Patent Office

Office européen des brevets

(19)

(11) Veröffentlichungsnummer: **0 175 161**
**B1**

(12) **EUROPÄISCHE PATENTSCHRIFT**

(45) Veröffentlichungstag der Patentschrift: 04.04.90

(21) Anmeldenummer: 85110551.0

(22) Anmeldetag: 22.08.85

(51) Int. Cl.⁵: **C 08 L 101/00,** C 08 L 9/08,
C 08 L 33/08, C 08 L 67/02,
C 08 L 77/00, C 08 L 69/00

(54) **Formmassen auf Basis von Thermoplasten.**

(30) Priorität: 15.09.84 DE 3433976
16.07.85 DE 3525319

(43) Veröffentlichungstag der Anmeldung:
26.03.86 Patentblatt 86/13

(45) Bekanntmachung des Hinweises auf die
Patenterteilung:
04.04.90 Patentblatt 90/14

(84) Benannte Vertragsstaaten:
BE CH DE FR GB IT LI NL

(56) Entgegenhaltungen:
EP-A-0 111 260
EP-A-0 125 483
US-A-4 086 300

(73) Patentinhaber: **HÜLS AKTIENGESELLSCHAFT
- RSP Patente / PB 15 - Postfach 13 20
D-4370 Marl 1 (DE)**

(72) Erfinder: **Gerth, Christian, Dr.
In der Thiebrei 80
D-4358 Haltern (DE)**
Erfinder: **Dröscher, Michael, Dr.
Hetkerbruch 34
D-4270 Dorsten 11 (DE)**

**Die Akte enthält technische Angaben, die nach dem Eingang der Anmeldung eingereicht wurden und die nicht in dieser Patentschrift enthalten sind.**

Courier Press, Leamington Spa, England.

## Beschreibung

Gegenstand der Erfindung sind Formassen auf Basis von Thermoplasten, denen bei erhöhter Temperatur, unter erhöhtem Druck und unter Einwirkung von starken Scherkräften mindestens ein weiterer, als wäßriger Latex vorliegender Kunststoff zugemischt wird.

Es ist seit langem Stand der Technik, die Eigenschaften eines Thermoplasten durch inniges Zumischen eines weiteren Polymeren zu verändern und zu verbessern.

Es ist auch bekannt, das weitere Polymere als wäßrigen Latex dem aufgeschmolzenen Thermoplasten zuzumischen (Adv. Polym. Techn. 3, (1983), S, 41 ff; US—PS 3 742 093). Als Thermoplasten, denen im geschmolzenen Zustand der Latex zugeführt wird, werden nur solche Polymere genannt, welche durch Polymerisation erhalten werden. Harze, die durch Polykondensation erhalten werden, sind nicht aufgeführt.

Diese Tatsache ist ohne weiteres verständlich, da es dem Fachmann geläufig ist, daß Polykondensationsharze, insbesondere im geschmolzenen Zustand, ausgesprochen empfindlich gegen Wasser und Wasserdampf reagieren. Es tritt regelmäßig ein deutlicher Abbau des Molekulargewichts auf (T. Davies in "Chemical Reactions of Polymers"—E. M. Fetters, Herausgeber, High Polymers XIX, Interscience Publishers, N. Y. 1964, Seite 533 ff; R. Feldmann, R. Feinauer, Angewandte Makromolekulare Chemie, 54 (1976) 1—13).

Um so unerwarteter ist es, daß diese bekannte Technologie doch auf Polykondensationsharze angewendet werden kann, wobei der Thermoplast ein Polyester, Polyamid oder Polycarbonat ist, dem im geschmolzenen Zustand ein, als nicht vorbehandelter wäßriger Latex vorliegendes Copolymerisat, das keine polyfunctionellen vernetzenden Monomeren enthält, auf Basis von α-Olefinen, konjugierten bzw. nicht konjugierten Dienen, Styrol, Acrylnitril, Vinylchlorid, Vinylacetat, Vinylidenfluorid bei Temperaturen im Bereich von 150 bis 300°C und bei einem Druck im Bereich von 1 bis 100 bar zugemischt wird.

Vorzugsweise wird die Mischungstemperatur so gewählt, daß sie 10 bis 70°C, vorzugsweise 15 bis 40°C, oberhalb des Schmelzpunktes des Polykondensationsharzes liegt.

Als Polykondensationsharze kommen Homopolyester, Copolyester, Blockcopolyester—insbesondere solche auf Basis der Terephthalsäure (Sorensen und Campbell, Preparative Methods of Polymer Chemistry, Interscience Publishers Inc., N. Y., 1961, Seite 111—127, Kirk-Othmer, Encyclopedia of chemical technology, Vol. 18, John-Wiley & Sons (1982), Seiten 549—574; US—PS 2 465 319, US—PS 3 047 539), Polyamide—so z.B. 6-, 6/6-, 6/12- oder 12 Polyamide (US—PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seite 328—435), Polycarbonate (US—PSS 3 028 365, 3 275 601, 3 148 172, 3 062 781, 2 991 273, 3 271 367, 2 999 835, 2 970 131, 2 999 846; DE—OSS 15 70 703, 20 63 050, 20 63 052, 22 11 956, 22 11 957, FR—PS 1 561 518; H. Schnell, "Chemistry and Physics of Polycarbonates", Interscience Publishers, N.Y., 1964) infrage.

Die als wäßriger Latex vorliegenden Kunststoffe sind sowohl als solche als auch in ihrer Wirkung auf die Polykondensationsharze bekannt (DE—PS 12 60 135, DE—AS 26 22 973, DE—OS 26 22 876, DE—OS 32 45 292, WP 82 03 222, F. Höscher, "Dispersionen synth. Hochpolymerer" I. Springer, Berlin, 1969; Encyclopedia of Polym. Sci. Technology, Vol. 8, 164—195, Interscience Publishers N, Y., 1968; C. B. Bucknall, "Toughened Plastics", Appl. Science Publishers, London 1977; Poelein, G. W. et al, "Science and Technology of Polymer Colloids", Vol I und II, Martinus Nijhoff Publishers, Den Haag, 1983). Es handelt sich um Copolymerisate auf der Basis von Styrol, Acrylnitril, konjugierte Diene wie Budadien, Isopren oder Chloropren, nicht konjugierte Diene, α-Olefine, Vinylchlorid, Vinylidenfluorid, Vinylacetat als Monomerbausteine. Zusätzlich können auch Monomere mit funktionellen Gruppen, wie z. B. Acrylsäure, Methacrylsäure, ungesättigte Dicarbonsäuren bzw. Derivate davon, Epoxi-, Amino-, Ester- oder Hydroxylgruppen enthaltende Verbindungen eingesetzt werden.

Die erfindungsgemäßen Formassen enthalten Polyester, Polyamide oder Polycarbonate, die durch Abmischung mehrerer dieser Polykondensationsharze bzw. durch Abmischen eines dieser Polykondensationsharze mit anderen thermoplastischen Polymerisaten, wie z. B. Polyethylen, Polypropylen, Polystyrol, Poly(methyl)methacrylat erhalten werden (DE—PS 12 41 606, DE—AS 16 94 190, DE—OS 22 64 268, WP 80 00 027).

Zur Herstellung der erfindungsgemäßen Formassen wird das Polykondensationsharz zuerst in einem Mischextruder oder in einem Beispritzextruder aufgeschmolzen, oder es wird direkt aus dem Polykondensationsreaktor in den Mischextruder eingeführt. Der Mischextruder kann z. B. zwei Schnecken enthalten, die nichtkämmend, gegenläufig oder gleichläufig kämmend arbeiten. Es können aber auch andere kontinuierlich fördernde Mischaggregate verwendet werden, die außer guter Mischwirkung auch eine effektive Entgasung der Schmelze ermöglichen.

Der Latex muß genügend scherstabil sein und wird mit einer geeigneten Pumpe, z. B. einer Kolbenmembran- oder einer Mohno-Pumpe in die zweite Öffnung des Mischaggregats eingespeist. Die Latexmenge, berechnet als Feststoffanteil, kann 1 bis 400 Gew.-Tl., bezogen auf 100 Gew.-Tl. Polykondensatschmelze, betragen, Bevorzugt ist eine Konzentration von 5 bis 100 Gew.-Tl. Latexfeststoffgehalt, besonders bevorzugt der Bereich von 10 bis 40 Gew.-Tl.

Das Abscheiden der wäßrigen Phase erfolgt durch mechanisches Abpressen und/oder Verdampfen durch Entspannen in einem Entgasungsschuß des Mischaggregates oder in einem nachgeschalteten Entgasungsextruder.

Die Formasse wird strangextrudiert, gekühlt und granuliert. Das Abmischen als solches ist nicht Gegenstand der Erfindung. Es ist aus dem Stand der Technik (Adv. Polym. Techn. 3 (1983), S. 41 ff; US—PS 3 742 093) bekannt.

Die erfindungsgemäßen Formmasen können einer Festphasennachkondensation unterworfen werden.

Übliche Zusatz- und Hilfsstoffe, wie Pigmente, Verarbeitungsmittel, Füll- und Verstärkungsstoffe, Hydrolyse- oder UV-Stabilisatoren, können sowohl während der Herstellung als auch in die fertigen Formmassen eingearbeitet werden.

Gegenüber den bisherigen Erkenntnissen des Standes der Technik ist es unerwartet, in der geschilderten, einfachen Weise Polymermischungen zu erhalten, ohne daß die Qualität des als Grundharz eingesetzten Polykondensats ernsthaft abfällt.

Die *Viskositätszahl (J)* des Poly(butylenterephthalats) wurde nach DIN 16 779, Teil 2, an Lösungen von 0,5 g Poly(butylenterphthalat) in 100 ml Phenol/o-Dichlorbenzol (50/50 Gew.-Teile) bei 25°C bestimmt.

Die relative Lösungsviskosität ($\eta_{rel}$) wurde nach DIN 53 727 in m-Kresol bei 25°C (Konzentration 0,5 g/dl) bestimmt.

Die nicht erfindungsgemäßen Beispiele sind durch Buchstahen gekennzeichnet.

## Beispiele

### Beispiel 1

Ein wäßriger Latex auf Basis von Styrol und Butadien (Styrol/Butadien-Verhältnis: 23,5:76,5 Gew.-%; Feststoffgehalt: 50 Gew.-%) wird in das zweite Raster eines Labordoppelschneckenkneters (Leistritz 30.34) mit gleichsinnig drehenden Schnecken mit einer Kolbenmembranpumpe eindosiert, während über das erste Raster des Kneters ein handelsübliches Homopoly(butylenterephthalat) (J=105 cm²/g) (VESTODUR$^R$ 1000) eingebracht wird. Die Zugabe der Latexmenge geschieht in der Weise, daß in der fertigen Formmasse der Styrol/Butadien-Polymeranteil 21 Gew.-% beträgt. Die Schmelztemperatur liegt bei 250°C. In den Rastern 5 und 8 des ingesamt 10 Raster (33,5 D) langen Kneters wird die Schmelze unter Anlegen von Vakuum durch Abdampfen des Wassers entgast. Der Restwassergehalt der Schmelze an der Austragsdüse des Kneters beträgt 0,1 bis 0,15 Gew.-%. Die Schmelze wird im Wasserbad abgekühlt, stranggranuliert und getrocket (Ausstoß: 5 kg/h). Die Viskositätszahl (J) beträgt—bezogen auf den Polyesteranteil—100 cm³/g.

### Beispiel 2

Die Formmassen werden wie in Beispiel 1 hergestellt. Das Granulat wird 24 Stunden lang bei 200°C, 40 mbar und bei einem Stickstoffstrom von 0,5 m³/h in einem Taumeltrockner thermisch nachbehandelt. Die Viskositätszahl (J) beträgt-—bezogen auf den Polyesteranteil—115 cm³/g.

### Beispiel 3

Es wird wie in Beispiel 1 verfahren, wobei ein Poly(butylacrylat)Latex eingesetzt wird. Die Viskositätszahl (J) beträgt—bezogen auf den Polyesteranteil—98 cm³/g.

### Beispiel 4

Die in Beispiel 3 hergestellte Formmasse wird in Granulatform bei 200°C, 40 mbar und in einen Stickstoffstrom (0,5 m³/h) 24 Stunden thermisch nachbehandelt. Die Viskositätszahl (J) beträgt—bezogen auf den Polyesteranteil—110 cm³/g.

### Beispiel A

Der im Beispiel 1 beschriebene Latex wird gefällt, getrocknet, bei tiefer Temperatur zu Krümeln gemahlen und unmittelbar darauf in einem Labormischer mit dem in Beispiel 1 verwendeten Homopoly(butylenterephthalat) im Gewichtsverhältnis 20:80 gemischt. Die Granulatmischung wird in dem in Beispiel 1 beschriebenen Schmelzkneter aufgeschmolzen (250°C) und gemischt. Die Schmelze wird in ein Wasserbad ausgetragen, stranggranuliert und getrocknet. Die Viskositätszahl (J) beträgt—bezogen auf den Polyesteranteil—101 cm³/g.

### Beispiel 5

Der im Beispiel 1 beschriebene SBR-Latex wird nach dem dort angegebenen Verfahren in ein handelsübliches Polyamid ($\eta_{rel}$=1,7) (VESTAMID$^R$ L1700) im Gewichtsverhältnis 20:80 eingearbeitet. Der $\eta_{rel}$=Wert der Mischung beträgt—bezogen auf den Polyamidanteil—1,67.

### Beispiel 8

Es wird wie im Beispiel A verfahren, aber statt des Polyesters wird das Polyamid aus Beispiel 5 eingesetzt. Der $\eta_{rel}$-Wert der Mischung beträgt—bezogen auf den Polyamidanteil—1,68.

## Patentansprüche

1. Formmasse auf der Basis eines Thermoplasten, dem bei erhöhter Temperatur, unter erhöhtem Druck und unter Einwirkung von starken Scherkräften mindestens ein weiterer, als wäßriger Latex vorliegender Kunststoff, der keine polyfunktionellen, vernetzenden Monomeren enthält, zugemischt wird, wobei der Thermoplast ein Polyester, Polyamid oder Polycarbonat ist, dem im geschmolzenen Zustand ein, als nicht vorbehandelter wäßriger Latex vorliegendes Copolymerisat auf Basis von α-Olefinen, konjugierten bzw. nicht konjugierten Dienen, Styrol, Acrylnitril, Vinylchlorid, Vinylacetat, oder Vinylidenfluorid bei Temperaturen im Bereich von 150 bis 300°C und bei einem Druck im Bereich von 1 bis 100 bar zugemischt wird.

2. Formmasse gemäß Anspruch 1, dadurch gekennzeichnet, daß der Latex bei Temperaturen im Bereich von 200 und 280°C zugemischt wird.

3. Formmasse gemäß Anspruch 1 und 2, dadurch gekennzeichnet, daß der Latex bei solchen Temperaturen zugemischt wird, die 10 bis 70°C oberhalb des Schmelzpunktes des Thermoplasten gemäß Anspruch 1 liegen.

4. Formmasse gemäß den Ansprüchen 1 bis 3, dadurch gekennzeichnet, daß der wäßrige Latex ein Styrol/Butadien-Polymer enthält.

## Revendications

1. Masse à mouler à base d'un thermoplaste auquel on a mélangé, à température élevée, sous une pression élevée et sous l'action de fortes forces de cisaillement, au moins une autre matière synthétique se présentant sous forme de latex aqueux et ne renfermant pas de monomères polyfonctionnels réticulants, le thermoplaste étant un polyester, une polyamide ou un polycarbonate, auquel on a mélangé, à l'état fondu, un produit de copolymérisation (présent sous forme d'un latex aqueux non-prétraité) à base d'alpha-oléfines, de diènes conjugués ou non conjugués, de styrène, d'acrylonitrile, de chlorure de vinyle, d'acétate de vinyle et de fluorure de vinylidène, à des températures situées dans un domaine de 150 à 300°C et sous une pression allant de 1 à 100 bar.

2. Masse à mouler selon la revendication 1, caractérisée par le fait que le latex est mélangé à des températures situées dans un domaine de 200 à 280°C.

3. Masse à mouler selon les revendications 1 et 2, caractérisée par le fait que le latex est mélangé à des températures situées de 10 à 70°C au-dessus du point de fusion du thermoplaste selon la revendication 1.

4. Masse à mouler selon les revendications 1 à 3, caractérisée par le fait que le latex aqueux renferme un polymère de styrène et de butadiène.

## Claims

1. A moulding composition based on a thermoplastic with which at least one further plastic which contains no polyfunctional, crosslinking monomers and is in the form of an aqueous latex is admixed at elevated temperature, under elevated pressure and under the influence of strong shear forces, the thermoplastic being a polyester, polyamide or polycarbonate with which, in the molten state, a copolymer which is in the form of a non-pretreated aqueous latex and is based on α-olefins, conjugated or non-conjugated dienes, styrene, acrylonitrile, vinyl chloride, vinyl acetate or vinylidene fluoride is admixed at a temperature in the range from 150 to 300°C and at a pressure in the range from 1 to 100 bar.

2. A moulding composition according to claim 1, characterised in that the latex is admixed at a temperature in the range from 200 to 280°C.

3. A moulding composition according to claim 1 or 2, characterised in that the latex is admixed at a temperature 10 to 70°C above the melting point of the thermoplastic according to claim 1.

4. A moulding composition according to any of claims 1 to 3, characterised in that the aqueous latex contains a styrene/butadiene polymer.